# DEMANDE DE BREVET EUROPEEN

(11) **EP 1 662 073 A1**
(43) Date de publication de la demande: **31.05.2006**
(21) Numéro de dépôt: 05356206.2
(22) Date de dépôt: 25.11.2005
(51) Int. Cl.: E04H 17/00

(54) **Barrière souple d'interdiction de passage pour animaux**

(30) Priorité: 30.11.2004 FR 0412692
(71) Demandeur: Chapron Lemenager, 14230 Isigny sur Mer (FR)
(72) Inventeur: Rey, Alain, 42370 Saint Andre d'Apchon (FR)
(74) Mandataire: Myon, Gérard Jean-Pierre

(57) **Abrégé**

L'invention concerne une barrière souple destinée à interdire le passage d'un animal entre deux zones prédéfinies. Cette barrière comprend au moins un montant (1) supportant au moins un fil (7) disposé de manière à interdire le passage. Le fil (7) traverse le montant (1) et est pris dans la matière constitutive de celui-ci, notamment par surmoulage.

## Description

L'invention a trait à une barrière souple permettant d'interdire le passage d'un animal entre deux zones prédéfinies. Le terme barrière doit être compris comme un moyen d'interdiction de passage d'un animal mais également comme un moyen de confinement d'un animal dans une zone, de manière à empêcher le passage de ce dernier, par exemple, entre l'intérieur et l'extérieur d'un terrain.

De telles barrières souples sont notamment utilisées pour confiner des petits animaux domestiques, par exemple des volailles, des ovins, des caprins, dans un terrain, notamment une pâture. Ces barrières sont mises en place par le propriétaire des animaux selon la partie du terrain qu'il souhaite allouer aux animaux. Elles doivent donc être aisément déplaçables et faciles à transporter, notamment lorsqu'on les utilise pour parquer des ovins ou des caprins qui se déplacent fréquemment entre plusieurs pâtures.

Les barrières souples connues comprennent des montants pourvus à chaque extrémité d'une encoche, une des extrémités de ces montants recevant également une pointe métallique permettant la fixation du montant dans le sol. Des fils, dits de chaîne, relient deux montants entre eux et sont coincés au niveau des encoches situées à chaque extrémité des montants. D'autres fils, dits de trame, perpendiculaires aux fils de chaîne, sont également disposés entre les montants. Le terme fil doit être compris comme un fil ou un cordage monofilament ou multifilaments, assemblés, tressés ou torsadés. Ce fil ou cordage est de section circulaire, ovale ou plat en forme de ruban.

Les fils de chaîne et les fils de trame forment ensemble un filet. Hormis les deux fils de chaîne supérieur et inférieur qui sont solidaires des montants, les autres fils de chaîne sont maintenus globalement en position sur les montants par entrelaçage autour des montants. Il s'ensuit que lorsqu'une barrière de plusieurs mètres de long doit être transportée ou rangée, il est fréquent que les montants et les fils s'emmêlent ce qui, outre une possible détérioration de la barrière, ralentit la phase de rangement et/ou d'installation de celle-ci. De plus, il est fréquent que ces barrières soient électrifiées, c'est-à-dire que les fils de chaîne possèdent également un filament électrique permettant de faire passer un courant électrique, cela à l'exception du fil de chaîne situé à proximité du sol, de manière à éviter une mise à la terre intempestive de la barrière. Les fils de trame ne sont pas électrifiés et sont réalisés dans un matériau électriquement isolant de manière à éviter un court circuit, lors du transport et/ou la mise en oeuvre de la barrière. Par ailleurs la fabrication de telles barrières est fastidieuse, l'entrelaçage des fils de chaîne sur le montant se faisant manuellement. On connaît par GB-A-1 366 632, des fils de chaîne et de trame reliés au niveau de leur intersection non pas par nouage mais par une pièce surmoulée sur la zone de jonction des fils. L'enseignement de ce document ne permet pas d'éviter l'emmêlement des fils du filet lors du repli de la barrière.

C'est à ces inconvénients qu'entend plus particulièrement remédier l'invention en proposant une barrière souple aisée à réaliser, à manipuler et à transporter où les fils de chaîne reliant les montants sont correctement maintenus en place sur ces derniers, même lors du pliage de la barrière.

A cet effet, l'invention a pour objet une barrière souple destinée à interdire le passage d'un animal entre deux zones prédéfinies, la barrière comprenant au moins un montant supportant au moins un fil disposé de manière à interdire le passage, caractérisée en ce que le fil traverse le montant et est pris dans la matière constitutive de celui-ci.

On dispose ainsi d'un montant dans lequel les fils de chaîne sont parfaitement intégrés et ne peuvent pas, à ce niveau là, s'emmêler. Par ailleurs, ce montage permet la mise en place d'un procédé de fabrication en continu.

Selon des aspects avantageux mais non obligatoires de l'invention, la barrière peut incorporer une ou plusieurs des caractéristiques suivantes :
- Le fil est surmoulé dans le montant.
- Le montant est une barre pleine pourvue, à une extrémité, d'un organe de fixation au sol, tel qu'une pointe.
- Le montant est traversé par au moins deux fils parallèles, disposés selon une direction globalement perpendiculaire à un axe longitudinal du montant. Avantageusement, les fils parallèles sont reliés par au moins un autre fil de manière à réaliser un filet, les fils parallèles formant les fils de chaîne, l'autre fil formant un fil de trame.

L'invention a également pour objet un procédé de fabrication en continu d'une barrière souple destinée à interdire le passage d'un animal entre deux zones prédéfinies, caractérisé en ce qu'il comprend des étapes dans lesquelles :
a) on réalise au moins un moule dans lequel sont ménagées l'empreinte d'un montant et l'empreinte d'au moins un fil de chaîne, ce dernier étant disposé selon une direction globalement perpendiculaire à un axe longitudinal du montant,
b) on dispose dans le moule au moins deux fils de chaîne,
c) on injecte dans le moule la matière constitutive d'un montant de la barrière,
d) on déplace, après ouverture du moule, les fils de chaîne, de manière à dégager le montant,
e) on poursuit la fabrication de la barrière à partir de l'étape b).

En variante le procédé comprend des étapes dans lesquelles :
a₁) on réalise deux demi moules dans lesquels sont ménagés l'empreinte d'un demi montant, au moins un des demi moules comportant l'empreinte d'au moins un fil de chaîne, ce dernier étant disposé selon une direction globalement perpendiculaire à un axe longitudinal du demi montant,
b₁) on injecte dans chaque demi moule la matière constitutive d'un demi montant de la barrière,
c₁) on réalise le moulage du nombre de demi montants nécessaires à la réalisation d'au moins une barrière,
d₁) on dispose entre au moins deux demi montants au moins deux fils de chaîne,
e₁) on assemble les deux demi montants en emprisonnant entre eux les fils de chaîne.

Selon des aspects avantageux mais non obligatoire de tels procédés peuvent incorporés une ou plusieurs des caractéristiques suivantes :
- Lors de l'étape e₁) les demi montants sont solidarisés par soudage, par collage, par vissage, par clipsage de manière à immobiliser les fils de chaîne dans le montant.
- Lors de l'étape b) ou d₁), les fils de chaîne sont déjà reliés par au moins un fil de trame.
- Postérieurement à l'étape d) ou e₁), on relie les fils de chaîne par au moins un fil de trame.
- Avant l'étape b), on électrifie au moins un fil de chaîne à l'aide d'au moins un filament électrique.

L'invention sera mieux comprise et d'autres avantages de celle-ci apparaîtront plus clairement à la lecture de la description qui va suivre de deux modes de réalisation d'une barrière souple conforme à l'invention, donnée uniquement à titre d'exemple et faite en se référant aux dessins annexés dans lesquels :
- la figure 1 est une vue de côté d'un montant utilisé dans une barrière conforme à l'invention, une partie des fils de chaîne reliant les montants étant représentée,
- la figure 2 est une vue partielle de côté d'une barrière souple conforme à l'invention,
- les figures 3 et 4 illustrent schématiquement un premier procédé de fabrication en continu d'une barrière conforme à l'invention et
- la figure 5 illustre un second procédé de fabrication en continu d'une barrière conforme à l'invention.

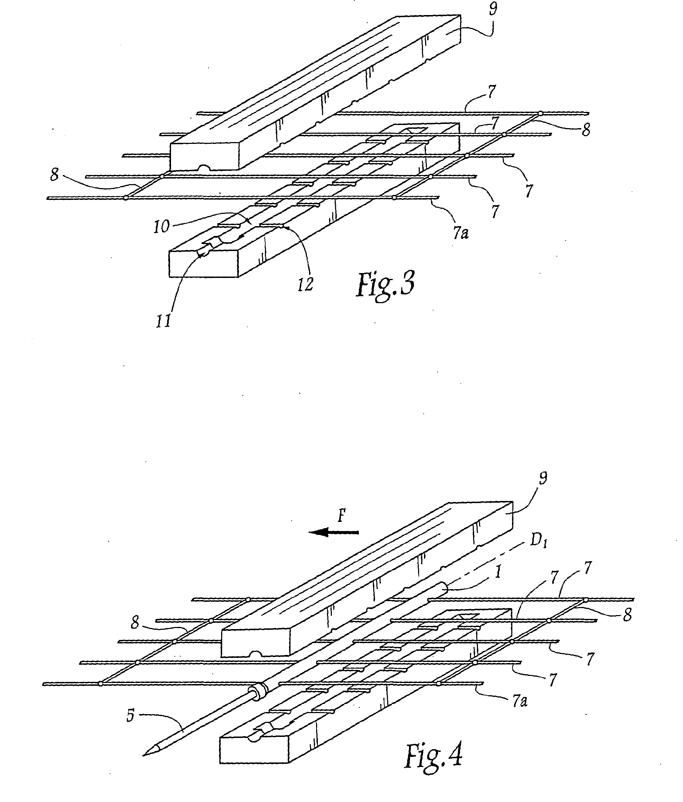

Pour la clarté des figures 3 à 5, les fils de trame ne sont pas tous représentés.

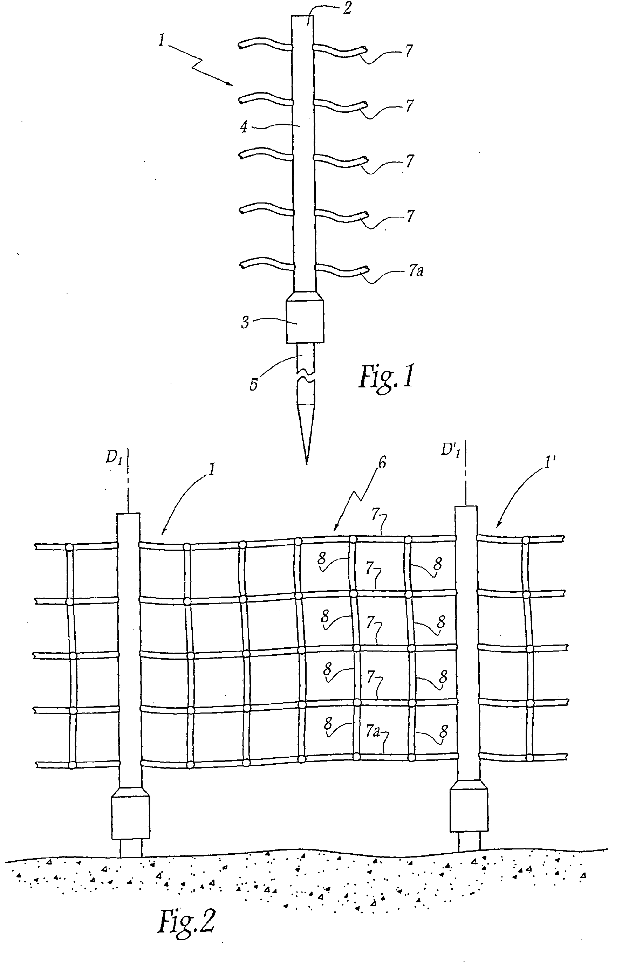

Le montant 1 représenté à la figure 1 est une barre pleine dont la section principale est circulaire. Une extrémité 2 de ce montant 1 est plate, en variante elle peut être arrondie. L'autre extrémité 3 est sensiblement plus large que le corps principal 4 du montant 1, de manière à former un pied 3 pour ce dernier. Ce pied 3 est équipé d'un organe de fixation 5, en forme de pointe, d'une longueur et d'un diamètre maximal adaptés pour être aisément enfoncé dans le sol et ainsi maintenir le montant 1 dans une position sensiblement verticale par rapport au sol.

Le montant 1 est avantageusement réalisé en un matériau à base d'un ou de plusieurs polymères, par exemple, de PVC (polychlorure de vinyle). La pointe 5 formant l'organe de fixation est réalisée dans un matériau résistant, insensible à la corrosion, par exemple en un acier ou dans un alliage d'aciers inoxydables ou galvanisés. En variante, elle peut également être réalisé dans un matériau à base d'un ou de polymères, de composites à base de polyester ou de fibres de verre, présentant des caractéristiques mécaniques suffisantes pour ne pas être détérioré lors de son enfoncement dans le sol.

Comme illustré à la figure 2, une barrière 6 souple comprend au moins deux montants 1, 1' disposés selon des directions sensiblement parallèles et confondues avec leurs axes longitudinaux D₁, D'₁ respectifs. Dans cette configuration, les montants 1, 1' sont globalement verticaux. Selon la hauteur de la barrière 6 et/ou le type d'animaux concernés, ces montants 1, 1' ont une longueur hors sol comprise entre 30 cm et 400 cm et ils sont éloignés l'un de l'autre d'une distance comprise entre 1 m et 10 m.

Comme représenté à la figure 2, entre deux montant 1, 1' ainsi fixés dans le sol, la barrière 6 comprend des fils 7 relativement souples, disposés selon des directions parallèles et reliant entre eux les montants 1, 1'. Ces fils 7, dits fils de chaîne, traversent les montants 1, 1' et se prolongent jusqu'à un autre montant voisin et/ou l'extrémité de la barrière 6. Ces fils 7 sont pris dans la matière constitutive du montant 1, 1'. Ils sont donc parfaitement immobilisés et bloqués en position dans chaque montant. Les fils 7 et les montants 1, 1' sont ainsi liés l'un à l'autre de façon pérenne, visuellement ils offrent l'aspect d'un organe réalisé d'une seule pièce. Ces fils 7 de chaîne sont, de manière avantageuse, réalisés en un matériau à base d'un ou de polymères, par exemple en PEHD (polyéthylène haute densité).

Ces fils 7 de chaîne sont reliés entre eux par d'autres fils 8, dits de trame, réalisés également dans un matériau à base d'un ou de polymères, qui peut être le même ou différent de celui formant les fils 7. On réalise ainsi un filet dont les mailles sont adaptées à la taille des animaux auxquels on veut interdire le passage. La liaison entre les fils 7 et 8 formant le filet peut être effectuée par nouage, par collage, par soudage ou par l'intermédiaire d'une pièce en forme de bille ou de perle, moulée sur les fils 7 et 8. Les fils 7 de chaîne peuvent recevoir un filament électrique, celui-ci est, par exemple, torsadé autour de ces fils 7 ou intégré à ceux-ci de manière à constituer ainsi une barrière électrique.

Ce filament électrique, non représenté, est solidaire du fil 7 et traverse donc également les montants 1, 1'. Dans la configuration « barrière électrique », seul le fil de chaîne 7a situé au voisinage du sol n'est pas électrifié, ceci afin d'éviter toute mise à la terre accidentelle de la barrière 6. Dans cette configuration, les fils 8 de trame reliant ainsi les fils 7 de chaîne électrifiés ne sont pas équipés de filaments électriques. Ils sont également isolants électriquement, de manière à éviter tout court-circuit entre les fils 7 de la barrière 6.

Avec une telle barrière 6, électrifiée ou non, les fils 7 de chaîne sont donc parfaitement maintenus, de façon unitaire, à chaque montant 1, 1'. En variante, on peut également envisager, que les fils 8 de trame présentent une rigidité relativement plus importante que celle des fils 7 de chaîne. Dans ce cas, on obtient une barrière 6 où l'écartement et le parallélisme entre les fils 7 de chaîne est globalement constant tout au long de la barrière 6. Ces fils rigides, lorsqu'ils sont en appui sur le sol, rigidifient la barrière en limitant la flèche du filet entre les montants.

Cette rigidité des fils 8 de trame peut être modulée en fonction de la barrière et/ou de ses capacités à être aisément rangée, transportée et mise en place. Par exemple, une barrière 6 relativement rigide, est destinée préférentiellement à un usage sédentaire et/ou pour des animaux de grande taille.

Dans une configuration courante, les fils 7 de chaîne et les fils 8 de trame ont une souplesse équivalente, de manière à permettre une utilisation, un transport et un rangement aisés de la barrière 6. Lors du rangement et du transport d'une telle barrière 6, il est aisé de l'enrouler autour des montants 1, 1'. Le déroulage pour la mise en place d'une telle barrière 6 n'est pas sujet à l'emmêlement des fils 7, 8 autour des montants 1, 1'.

De telles barrières 6 sont également aisées à fabriquer en continu comme cela est illustré aux figures 3 à 5.

Dans le premier procédé de fabrication illustré par les figures 3 et 4, on utilise un moule 9 dans lequel est réalisée l'empreinte 10 d'un montant et, au moins, l'empreinte 11 du pied 3 supportant l'organe de fixation dans le sol, c'est-à-dire la pointe 5. Cette empreinte 11 du pied 3 peut être prévue soit pour que la pointe 5 soit fixée lors de l'étape de moulage du montant soit pour que la pointe 5 soit fixée ultérieurement, par exemple par vissage, par collage, emmanchement en force ou par soudage.

Le moule 9 comporte également des empreintes 12, en nombre suffisant, des fils 7 de chaîne, ces empreintes 12 étant situées de part et d'autre de l'empreinte 10 du montant 1 et orientées selon des directions, parallèles entre elles, globalement perpendiculaires à l'axe longitudinal D₁ du montant 1.

Comme illustré à la figure 3, dans une étape effectuée après la réalisation du moule 9, on dispose dans l'empreinte 12 les fils 7 de chaîne destinés à relier les montants 1, 1'. Cette mise en place est prévue entre deux fils 8 de trame reliant ces fils 7 ou, éventuellement, au niveau d'un de ces fils 8 de trame, ce dernier étant alors noyé dans le montant 1, 1'.

On injecte ensuite dans le moule la ou les matières constitutives du montant 1, cette matière polymérise et prend en masse autour des fils 7. On obtient, comme représenté à la figure 4, un montant 1, dans lequel les fils 7 de chaîne sont incorporés de manière définitive par surmoulage. Comme illustré à la figure 4, la pointe 5 se trouve elle aussi maintenue en place et solidaire du montant 1. Il suffit alors, après ouverture du moule 9, de déplacer, selon la flèche F, la barrière 6 en cours de réalisation, plus particulièrement sa partie filet, pour amener au dessus du moule 9 des fils 7 libres de tout montant et ainsi en fabriquer un autre.

Dans une variante, non illustrée, l'extrémité 3, adaptée pour recevoir l'organe de fixation 5 est, par exemple, équipée d'un taraudage qui permet que la mise en place de la pointe 5 se fasse ultérieurement.

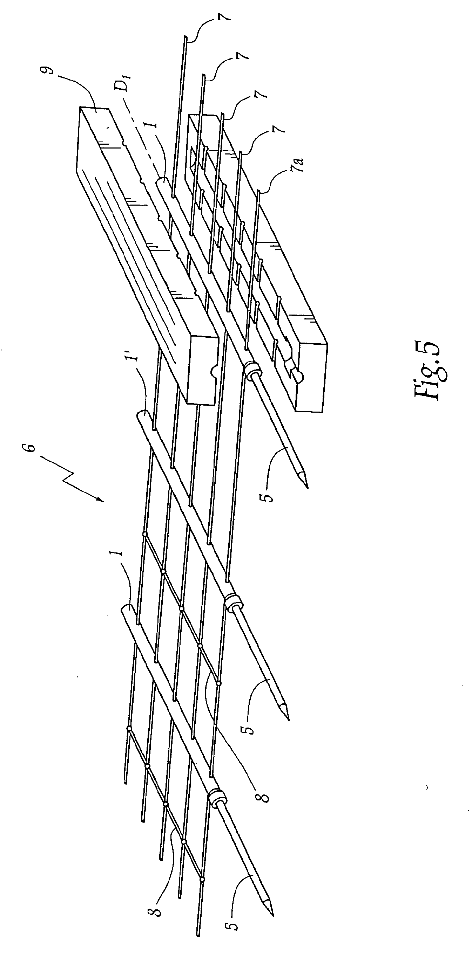

Dans le second mode de réalisation illustré par la figure 5, lors de l'étape de moulage des montants 1, seuls les fils 7 sont en place. On forme ensuite, par exemple, par collage, par soudage, par extrusion, par nouage ou à l'aide de billes ou de perles moulées, le filet de la barrière 6 en mettant en place des fils 8 de trame reliant ces fils 7 de chaîne, une fois les montants 1 réalisés et démoulés.

Ce second procédé de fabrication permet, en continu et à partir d'une structure de base d'une barrière, uniquement composée de montants 1, 1' et de fils 7 de chaîne, de créer, si nécessaire, différents types de filets aux mailles plus ou moins serrées pour interdire le passage des animaux de taille différentes. Pour cela, il suffit de faire varier la distance entre deux fils 8 de trame. En variante, on peut, par exemple pour des gros animaux, utiliser une barrière où seuls subsistent les fils 7 de chaîne.

Dans les deux modes de réalisations de la barrière 6, il est nécessaire de prévoir l'électrification de cette dernière préalablement au moulage des montants 1. Pour cela, soit on utilise des fils 7 de chaîne dans lesquels est déjà incorporé au moins un filament électrique, soit on incorpore le ou les filaments, par exemple par enroulement externe autour du fil 7, préalablement à la mise en place des fils 7 au dessus du moule 9.

Dans une autre configuration, les montants 1, 1' ont des formes différentes de celles décrites, par exemple ils sont de section carré ou rectangulaire. Le pied peut également être utilisé pour fixer définitivement la barrière 6, par exemple à un socle ou à une pièce déjà enfoncée ou fixée dans le sol de façon définitive.

Selon une variante non représentée de l'invention, les fils 7 de chaîne peuvent être pris dans la matière constitutive des montants 1 postérieurement au moulage de ceux-ci, sous la forme de deux demi montants dont au moins un est pourvu d'encoches de passage des fils 7. Ces demi montants sont réalisés, au préalable, dans chaque partie du moule 9. Lors de la réalisation de la barrière 6, les demi montants sont assemblés en emprisonnant entre eux, à la manière d'un « sandwich », les fils 7 de chaîne. Les fils 7 sont pris et immobilisés dans la matière des montants qu'ils traversent par soudage, par collage, par vissage ou par clipsage.

Dans une variante, les demi montants peuvent être assemblés en continu, comme précédemment, sur les fils 7, seuls ou reliés par les fils 8 de trame, entre deux fils 8 de trame ou au niveau d'un fil 8.

## Revendications

1. Barrière souple destinée à interdire le passage d'un animal entre deux zones prédéfinies, ladite barrière (6) comprenant au moins un montant (1, 1') supportant au moins un fil (7) disposé de manière à interdire le passage, **caractérisée en ce que** ledit fil (7) traverse ledit montant (1, 1') et est pris dans la matière constitutive de celui-ci.

2. Barrière selon la revendication 1, **caractérisée en ce que** ledit fil (7) est surmoulé dans ledit montant (1, 1').

3. Barrière selon l'une des revendications précédentes, **caractérisée en ce que** le montant (1, 1') est une barre pleine pourvue, à une extrémité (3), d'un organe de fixation au sol, tel qu'une pointe (5).

4. Barrière selon l'une des revendications précédentes, **caractérisée en ce que** ledit montant (1, 1') est traversé par au moins deux fils (7) parallèles, disposés selon une direction globalement perpendiculaire à un axe longitudinal (D₁, D'₁) dudit montant (1, 1').

5. Barrière selon la revendication 4, **caractérisée en ce que** lesdits fils (7) parallèles sont reliés par au moins un autre fil (8) de manière à réaliser un filet, lesdits fils (7) parallèles formant les fils de chaîne, l'autre fil (8) formant un fil de trame.

6. Procédé de fabrication en continu d'une barrière souple (6) destinée à interdire le passage d'un animal entre deux zones prédéfinies, **caractérisé en ce qu'**il comprend des étapes dans lesquelles :
a) on réalise au moins un moule (9) dans lequel sont ménagées l'empreinte (10) d'un montant (1) et l'empreinte (12) d'au moins un fil (7) de chaîne, ce dernier étant disposé selon une direction globalement perpendiculaire à un axe longitudinal (D₁) du montant (1),
b) on dispose dans le moule (9) au moins deux fils (7) de chaîne,
c) on injecte dans le moule (9) la matière constitutive d'un montant (1) de la barrière (6),
d) on déplace (flèche F), après ouverture du moule (9), les fils (7) de chaîne, de manière à dégager le montant (1),
e) on poursuit la fabrication de la barrière (6) à partir de l'étape b).

7. Procédé de fabrication en continu d'une barrière souple (6) destinée à interdire le passage d'un animal entre deux zones prédéfinies, **caractérisé en ce qu'**il comprend des étapes dans lesquelles :
a₁) on réalise deux demi moules dans lesquels sont ménagés l'empreinte d'un demi montant, au moins un des demi moules comportant l'empreinte d'au moins un fil de chaîne, ce dernier étant disposé selon une direction globalement perpendiculaire à un axe longitudinal du demi montant,
b₁) on injecte dans chaque demi moule la matière constitutive d'un demi montant de la barrière,
c₁) on réalise le moulage du nombre de demi montants nécessaires à la réalisation d'au moins une barrière,
d₁) on dispose entre au moins deux demi montants au moins deux fils de chaîne,
e₁) on assemble les deux demi montants en emprisonnant entre eux les fils de chaîne.

8. Procédé selon la revendication 7, **caractérisé en ce que** lors de l'étape e₁) les demi montants sont solidarisés par soudage, par collage, par vissage, par clipsage de manière à immobiliser les fils de chaîne dans le montant.

9. Procédé selon l'une des revendications 6 à 8, **caractérisé en ce que**, lors de l'étape b) ou d₁), les fils (7) de chaîne sont déjà reliés par au moins un fil (8) de trame.

10. Procédé selon l'une des revendications 6 à 8, **caractérisé en ce que**, postérieurement à l'étape d) ou e₁), on relie les fils (7) de chaîne par au moins un fil (8) de trame.

11. Procédé selon la revendication 6, **caractérisé en ce qu'**avant l'étape b), on électrifie au moins un fil de chaîne à l'aide d'au moins un filament électrique.
